# EUROPÄISCHE PATENTSCHRIFT

(11) **EP 1 028 146 B1**
(45) Veröffentlichungstag und Bekanntmachung des Hinweises auf die Patenterteilung: **13.10.2004**
(21) Anmeldenummer: 00101736.7
(22) Anmeldetag: 28.01.2000
(51) Int. Cl.: C09C 1/00, C08K 9/02

(54) **Farbiges Interferenzpigment**
Coloured interference pigment
Pigment d'interférence coloré

(30) Priorität: 10.02.1999 DE 19905427
(43) Veröffentlichungstag der Anmeldung: 16.08.2000
(73) Patentinhaber: MERCK PATENT GmbH, 64293 Darmstadt (DE)
(72) Erfinder: Bernhardt, Klaus, 64833 Gross-Umstadt (DE); Brückner, Hans-Dieter, Dr., 64289 Darmstadt (DE); Osterried, Karl, Dr., 64807 Dieburg (DE); Vogt, Reiner, Dr., 64289 Darmstadt (DE)

(56) Entgegenhaltungen:
- WO-A-93/08237
- WO-A-93/11194
- DE-A- 4 441 223
- DE-A- 19 502 231
- DE-A- 19 707 805

## Beschreibung

Die vorliegende Erfindung betrifft ein farbiges Interferenzpigment, das im Trägermaterial und in der Beschichtung Absorptionspigmente enthält.

Interferenzpigmente, die entweder im Substrat oder in der Beschichtung Absorptionspigmente enthalten, sind bekannt.

EP 0 608 388 beschreibt auf einem endlosen Band hergestellte SiO₂-Flakes, die unlösliche oder lösliche Farbmittel enthalten. Als unlösliche Farbmittel werden Pigmente mit einer Partikelgröße von weniger als 1 µm eingesetzt, wobei unter Pigmenten Weiß-, Schwarz-, Bunt- oder Leuchtpigmente verstanden werden. Die Pigmente werden im Precursor der SiO₂-Matrix, beispielsweise in einer Natronwasserglaslösung, dispergiert und die Dispersion auf das endlose Band aufgebracht. Als lösliche Farbmittel können in der SiO₂-Matrix farbgebende Metalloxide oder lösliche organische Pigmente enthalten sein. In diesem Fall werden Lösungen dieser Farbmittel dem Precursor vor dem Auftrag auf das endlose Band zugesetzt. Die auf diese Weise hergestellten SiO₂-Flakes werden als Substrate für Interferenzpigmente verwendet.

Interferenzpigmente, die in der Metalloxidbeschichtung Ruß als Absorptionspigment enthalten sind aus EP 0 499 864 bekannt. Ihre Herstellung erfolgt durch Vermischen einer Substrat- und einer Rußdispersion, zudosieren der wäßrigen Lösung eines Metallsalzes und Auffällen einer Metalloxidschicht auf das Substrat, wobei das Ruß mitgerissen und in die Metalloxydschicht eingebettet wird. Anschließend wird das Pigment unter Ausschluß von Sauerstoff bei 700 ° bis 900 °C kalziniert.

Interferenzpigmente, die mit einer dünnen Schicht eines organischen Farbstoffes umhüllt sind, sind aus US 5 156 678 bekannt. Sie werden hergestellt, indem eine Suspension des Pigments in einer Lösung des Farbstoffs hergestellt wird und die so erhaltene Suspension mit einem Lösungsmittel vermischt wird, in welchem der Farbstoff unlöslich ist.

DE 44 41 223 beschreibt nicht glänzende Pigmente mit hoher Farbintensität und hohem Deckvermögen, welche auf trocken gemahlenen plättchenförmigen Substraten basieren, die mit einer oder mehreren Schichten beschichtet sein können, welche Farbmittel enthalten. Die Farbmittel sind homogene Metalloxidschichten oder werden aus Farbstofflösungen aufgebracht.

In DE 197 07 805 wird ein Multischicht-Interferenzpigment mit absorbierender Mittelschicht offenbart. Die absorbierende Mittelschicht besteht aus einem Lacksystem, welches Ruß oder farbgebende Pigmente enthält. Die weiteren Schichten aus Metallen, Polymeren oder Metalloxiden sind homogen und werden im Vakuumverfahren auf einen Träger aufgebracht.

Aus DE 195 02 231 ist ein Effektpigment mit dunkler Körperfarbe bekannt, welches auf einem plättchenförmigen Substrat eine Schicht aufweist, welche Ruß in partikulärer Form enthält. Weitere Schichten aus Metalloxiden, Metalloxidhydraten oder Metallsuboxiden werden nasschemisch aufgebracht.

Deckvermögen und Glanz sind bei plättchenförmigen Pigmenten oftmals nur schwer gleichzeitig in befriedigendem Ausmaß zu realisieren. So zeichnen sich etwa mit einer oder mehreren dünnen Metalloxidschichten belegte Glimmerplättchen oder SiO₂-Flakes durch Interferenzfarben und einen hohen Glanz, gleichzeitig aber auch wegen des durchsichtigen Substrats durch eine hohe Transparenz und damit ein vergleichsweise geringes Deckvermögen aus. Es besteht deshalb die Notwendigkeit, das Deckvermögen zu verbessern.

Bei Pigmenten, die neben der die Interferenzfarbe erzeugenden Metalloxidschicht lediglich noch ein Absorptionspigment enthalten, sind optische Effekte, wie beispielsweise Farbflops begrenzt. Es besteht deshalb die Notwendigkeit, die optischen Effekte dieser Pigmente zu erweitern.

Aufgabe der vorliegenden Erfindung ist es, ein Interferenzpigment bereitzustellen, das neben einem hohen Deckvermögen vergleichsweise mehr optische Effekte besitzt.

Diese Aufgabe wird gemäß der Erfindung gelöst durch ein Interferenzpigment, umfassend eine plättchenförmige Schicht als Substrat und eine Beschichtung aus mindestens einer Metalloxidschicht und gegebenenfalls einer weiteren Schicht, wobei mindestens zwei Schichten zusätzlich Fairbmittel in Partikelform enthalten oder wobei mindestens eine Schicht zusätzlich ein Farbmittel in Partikelform enthält und eine weitere Schicht aus einem Farblack besteht.

Weiterhin wird diese Aufgabe gemäß der vorliegenden Erfindung gelöst durch ein Verfahren zur Herstellung des erfindungsgemäßen Pigmentes, indem
- in einem Precursor des Substratmaterials ein Farbmittel dispergiert wird,
- die Dispersion als dünner Film auf ein endloses Band aufgebracht wird,
- der flüssige Film durch Trocknung verfestigt wird,
- die entstandene Schicht vom Band getrennt und gegebenenfalls mit einer Säure behandelt wird,
- die erhaltenen Substratpartikel gewaschen und anschließend mit einer oder mehreren Schichten aus Metalloxiden belegt werden, wobei die Fällung der Metalloxide aus einer Dispersion eines Farbmittels erfolgt.

Die Aufgabe der Erfindung wird ebenfalls durch ein Verfahren gemäß den Ansprüchen 11, 12 oder 13 gelöst.

Gegenstand der Erfindung ist außerdem die Verwendung der erfindunggemäßen Pigmente zur Pigmentierung von Lacken, Druckfarben, Kunststoffen, Kosmetika und Glasuren für Keramiken und Gläser. Hierfür können sie auch als Mischungen mit handelsüblichen Pigmenten, beispielsweise anorganischen und organischen Absorptionspigmenten, Metalleffektpigmenten und LCP-Pigmenten, eingesetzt werden.

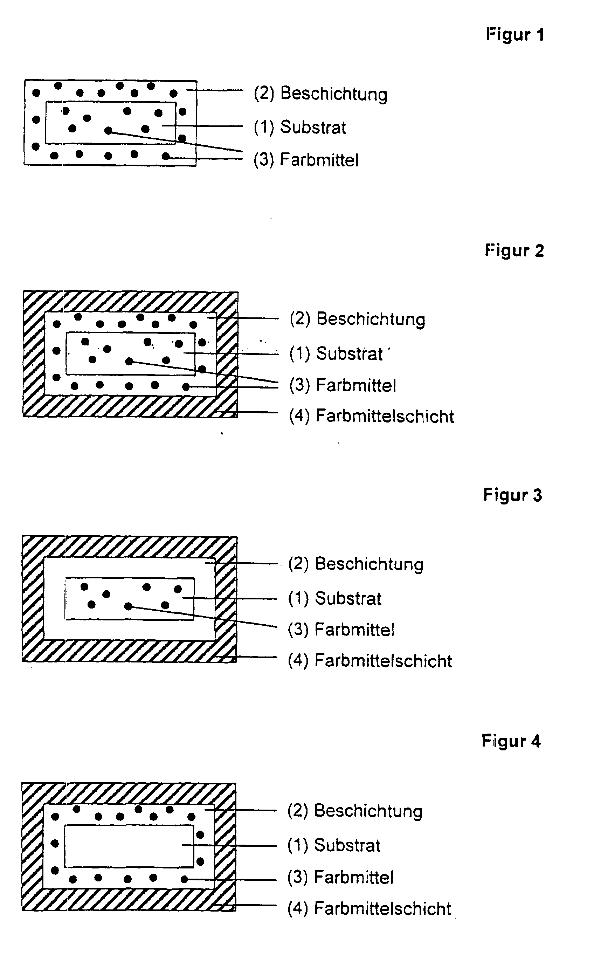

In einer ersten Ausführungsform besteht das erfindungsgemäße Pigment aus einem plättchenförmigen Substrat (1) und einer Beschichtung (2) aus mindestens einer Metalloxidschicht, wobei das Pigmeot im Substrat (1) und in der Beschichtung (2) zusätzlich mindestens ein Farbmittel (3) in Partikelform enthält. Der Aufbau dieses Pigmentes ist in Figur 1 dargestellt.

In einer zweiten Ausführungsform besteht das erfindungsgemäße Pigment aus einem plättchenförmigen Substrat (1), einer Beschichtung (2) aus mindestens einer Metalloxidschicht und einer Farbmittelschicht (4), wobei das Pigment Im Substrat (1) und in der Beschichtung (2) zusätzlich mindestens ein Farbmittel (3) in Partikelform enthält. Der Aufbau dieses Pigmentes ist in Figur 2 dargestellt.

In einer dritten Ausführungsform besteht das erfindungsgemäße Pigment aus einem plättchenförmigen Substrat (1), einer Beschichtung (2) aus mindestens einer Metalloxidschicht und einer Farbmittelschicht (4) auf der Beschichtung (2), wobei das Substrat mindestens ein Farbmittel (3) in Partikelform und wobei die Farbmittelschicht (4) ein Farbmittel in Partikelform enthält oder aus einem Farblack besteht enthält, Der Aufbau dieses Pigmentes ist in Figur 3 dargestellt.

In einer vierten Ausführungsform besteht das erfindungsgemäße Pigment aus einem plättchenförmigen Substrat (1), einer Beschichtung (2) aus mindestens einer Metalloxidschicht und einer Farbmittelschicht (4) auf der Beschichtung (2), wobei das Pigment in der Beschichtung (2) zusätzlich mindestens ein Farbmittel (3) in Partikelform enthält und wobei die Farbmittelschicht (4) ein Farbmittel in Partikelform enthält oder aus einem Farblack besteht. Der Aufbau dieses Pigmentes ist in Figur 4 dargestellt.

Bei den Ausführungsformen 2 bis 4 des erfindungsgemäßen Pigmentes kann das Substrat mehrfach mit dem zweischichtigen System, bestehend aus Beschichtung (2) und Farbmittelschicht (4), belegt sein, bevorzugt ist aber eine Belegung aus nur einer Beschichtung (2) und einer Farbmittelschicht (4).

Die erfindungsgemäßen Pigmente basieren auf plättchenförmigen Substraten. Diese Substrate können aus Siliziumdioxid, Silikaten, Boroxid, Boraten, Aluminlumoxid oder anderen transparenten, stabilen und zur Aufnahme der löslichen oder unlöslichen Farbmitteln befähigten Materialien bestehen.

Als Precursor für die Herstellung der Substrate werden Lösungen von anorganischen oder organischen Verbindungen der Metalle Aluminium, Silicium, Kalium oder Natrium mit Boraten, Aluminaten, Poly- bzw. Metaphosphaten, Silikaten oder Gemischen derselben eingesetzt. Ein bevorzugter Precursor ist Wasserglas.

Im Fall der Ausführungsform 4 des erfindungsgemäßen Pigmentes kann das Substrat auch aus Glimmer, synthetischem Glimmer, anderen Schichtsilikaten oder Glasplättchen bestehen.

Die plättchenförmigen Substratpartikel haben eine Dicke zwischen 0,05 und 5 µm und insbesondere zwischen 0,2 und 2 µm. Die Ausdehnung in den beiden anderen Dimensionen beträgt zwischen 1 und 250 µm und insbesondere zwischen 2 und 100 µm.

In das Substrat sind gemäß den Ausführungsformen 1 bis 3 des erfindungsgemäßen Pigmentes als unlösliche Farbmittel Pigmentpartikel eingelagert, deren Abmessungen deutlich geringer sind als die Dicke des Substrates. Die Partikelgröße der handelsüblichen Pigmente muß deshalb an die gewünschte Schichtdicke des Substrates angepaßt werden. Der Begriff Pigmentpartikel ist hier weit zu fassen und umfaßt Weiß-, Schwarz-, Bunt- sowie Leuchtpigmente.

Geeignete anorganische Pigmente sind Weißpigmente wie Titandioxid, Bariumsulfat oder Zinkoxid, beispielsweise Titandioxid 2310 (Hersteller: Kronos), Titandioxid R-D (Hersteller: Bayer), Titandioxid R-506 (Hersteller: Sachtleben).

Geeignete Schwarzpigmente sind Magnetit oder Pigmentruß, beispielsweise Farbruß FW 200 (Degussa).

Als Buntpigmente sind Eisen- oder Chromoxid, Mischphasenoxide wie (Ti, Cr, Sb)O₂, CoAl₂O₄ (Thenards Blau), ZnAl₂O₄ (Rinmans Grün), (Fe, Cr)₂O₃ sowie Sulfide, beispielsweise CdS, geeignet.

Geeignet sind auch anorganische Leuchtpigmente, wie fluoreszierendes silberdotiertes Zinkoxid, phosphoreszierendes kupferdotiertes Zinksulfid oder Ultramarinpigmente.

Geeignete organische Pigmente sind Azopigmente, Anthrachinon-Pigmente, Indigo oder Thioindigo-Derivate, Diketo-Pyrrolo-Pyrrol-Pigmente, Perylen-Pigmente oder Phthalocyanin-Pigmente. Besonders geeignete Rotpigmente sind Paliogen Maron L3920 (Hersteller: BASF), DPP-Irgazin Rot BO (Hersteller: Ciba), Chinquaisia Margenta RT355D (Hersteller: Ciba), Hostaperm Rot E2B70 (Hersteller: Hoechst - Clariant), Sicotrans Rot L2817 (Hersteller: BASF), Carmin Rot, Thioindigo, DC Rot 6 auch als Lithol Rubin 13 bezeichnet, DC Rot 33 auch als Acid Fuchsine bezeichnet. Besonders geeignete Blaupigmente sind Hostaperm Blau AFL (Hersteller: Hoechst - Clariant), Irgazin Blau A3RN (Hersteller: Ciba), Paliogen Blau L6470 (Hersteller: BASF), Berliner Blau, FDC Blau 1 auch als Brilliant Blau bezeichnet. Besonders geeignete Grünpigmente sind Monastral Grün 64 Spezial (Hersteller: Zeneca - ICI), Hostaperm Grün 8G (Hersteller: Hoechst - Clariant), DC Grün 5 auch als Alizarin Cyanin Grün F bezeichnet und als Gelbpigmente sind besonders geeignet Irgazin Gelb 5GTL (Hersteller: Ciba), Irgacolor Gelb 2GLMA (Hersteller: Ciba), FDC Gelb 5 auch als Tartrazin bezeichnet, FDC Gelb 6 auch als Sunset Gelb bezeichnet.

In vielen Fällen ist es vorteilhaft, zur besseren Dispergierung der Pigmentpartikel im Precursor noch Netzmittel zuzusetzen, beispielsweise Hydropallat 884 (Hersteller: Henkel). Weder der Typ noch die Menge des zugesetzten Netzmittels sind kritisch, aber im allgemeinen liegt der Anteil des Netzmittels maximal bei 2 Gew.-%, bezogen auf die Dispersion.

Der auf das Gewicht des unbeschichteten Substrates bezogene Gewichtsanteil der eingelagerten Pigmentpartikel liegt zwischen 0,5 und 40 % und insbesondere zwischen 5 und 25 %. Weitere Angaben sind der Europäischen Patentschrift 0 608 388 zu entnehmen.

Das Substrat kann als Farbmittel aber auch ein lösliches Farbmittel enthalten. Unter dem Begriff "lösliches Farbmittel" ist entweder ein farbgebendes Metalloxid, beispielsweise Eisenoxid, Chromoxid oder Kobaltoxid, oder ein löslicher organischer Farbstoff zu verstehen.

Generell sind für die Anfärbung des Substrates farbgebende Verbindungen der Metalle Titan, Vanadium, Chrom, Mangan, Eisen, Kobalt, Nickel und Kupfer, vorzugsweise Verbindungen von Kobalt, Kupfer, Eisen und Chrom, geeignet. Sie werden als lösliche Verbindungen dem Precursor des Substrates zugesetzt. Man erhält ein farbiges, transparentes Substrat mit einer Farbskala, ähnlich derjenigen von farbigem, transparenten Glas. Durch Zusatz von Eisenverbindungen erhält man zum Beispiel rotbraune Farbtöne, durch Zusatz von Chromverbindungen grüne Farbtöne und durch Zusatz von Kobaltverbindungen blaue Farbtöne.

Als lösliche organische Farbstoffe können in Lauge lösliche Hydroxyanthrachinonfarbstoffe oder saure Azofarbstoffe eingesetzt werden.

Das lösliche Farbmittel ist im unbeschichteten Substrat in einem Anteil von 0,01 bis 50 Gew.-%, vorzugsweise 1 bis 30 Gew.-% enthalten. Weitere Angaben sind EP 0 608 388 zu entnehmen.

Die erfindungsgemäßen Pigmente enthalten auch in der Metalloxid-Beschichtung zusätzliche Farbmittel. Werden beispielsweise Rußpartikel verwendet, dann werden Partikelgrößen von 5 bis 200 nm und insbesondere 10 bis 100 nm verwendet. Derartige Pigmente, die bevorzugt Rußpartikel in Schichten aus Titandioxid, Eisenoxid, Zinnoxid, Chromoxid und Zinkoxid enthalten sind in EP 0 499 864 beschrieben.

Weiterhin können die erfindungsgemäßen Pigmente auch Partikel aus Titandioxid, Aluminiumoxid, Siliciumdioxid, Zinndioxid, Magnesiumoxid, Zinkoxid, Cerdioxid, Wolframoxid, Molybdänoxid, Zirkonoxid, aber auch Mischoxide, wie Cr₂FeO₄, CoAl₂O₄ oder NiAl₂O₄, in der Metalloxidschicht enthalten.

Anstelle anorganischer Pigmentpartikeln können auch organische Pigmentpartikel in der Metalloxidschicht enthalten sein, wobei insbesondere temperaturstabile organische Pigmente bevorzugt sind. Als organische Pigmentpartikel werden vorzugsweise Phthalocyanine, Verlackungsprodukte von basischen Farbstoffen mit Heteropolysäuren, Anthrachinone, Phenazine, Phenoxazine, Diketopyrrolopyrrole oder Perylene verwendet. Prinzipiell können alle Pigmente, die für die Einarbeitung in das Substrat beschrieben wurden auch in die Beschichtung des erfindungsgemäßen Pigmentes eingearbeitet werden. Die Einlagerung von kleinen Metalloxid- oder organischen Pigmentpartikeln mit einer durchschnittlichen Größe von 10 bis 40 nm in die Hohlräume der Metalloxidbeschichtung bewirkt eine deutliche Erhöhung des Deckvermögens und des Glanzes, verbunden mit einer hohen Homogenität der Beschichtung im Vergleich zu Pigmenten, die durch Mischfällung erhalten werden. Das Deckvermögen und bei gefärbten Pigmentpartikeln die beobachtungswinkelabhängige Absorptionsfarbe der erfindungsgemäßen Pigmente kann in einem weiten Bereich durch die Konzentration der eingelagerten Pigmentpartikel variiert werden. Der auf die Matrix bezogenen Massenanteil der eingelagerten Pigmentpartikel liegt zwischen 0,5 und 30 % und insbesondere zwischen 2 und 20 %. Weitere Angaben zu Pigmenten, die in der Beschichtung Pigmentpartikel enthalten, sind DE 41 40 295 zu entnehmen.

Im Falle einer Farbmittelschicht auf der Metalloxidbeschichtung kann das Farbmittel gemäß US 4 772 331 zusammen mit einem organischen Bindemittel die äußerste Schicht des Pigmentes bilden.

Phthalocyanin- oder Metallphthalocyaninfarbstoffe können aber auch ohne Zuhilfenahme von Bindemittelsystemen oder anderen Hilfsstoffen als fest anhaftende äußere Schicht gemäß US 5 156 678 aufgebracht sein. Die Farbmittel können aber auch durch ein Hochgeschwindigkeitsrührverfahren (high speed stirring treatment) gemäß US 5 336 309 auf die Metalloxidbeschichtung aufgebracht sein.

Der Anteil des Farbmittels, das die äußere Schicht bildet, beträgt 0,5 bis 30 Gew.-%, vorzugsweise 1 bis 10 Gew.-%, bezogen auf das gesamte Pigment. Prinzipiell können alle Farbmittel eingesetzt werden, die auch für die Anfärbung des Substrates geeignet sind.

Die Herstellung des erfindungsgemäßen Pigmentes erfolgt in einem zweistufigen Verfahren. In der ersten Stufe wird das plättchenförmige Substrat mit Hilfe eines endlosen Bandes hergestellt.

Das endlose Band, welches über ein Rollensystem geführt wird, durchläuft ein Auftragswerk, wo es mit einem dünnen Film des Precursors beschichtet wird. Der Precursor enthält entweder anorganische oder organische Pigrrientpartikel in Form einer Dispersion oder er enthält gelöste Farbstoffe oder farbgebende Metallverbindungen.

Als geeignete Auftragswerke können Walzenauftragswerke sowie Fließer eingesetzt werden. Die Bandgeschwindigkeit liegt zwischen 2 und 800 m/min, vorzugsweise 5 bis 400 m/min.

Um eine gleichmäßige Benetzung des Kunststoffbandes zu erzielen, ist es zweckmäßig, der Beschichtungslösung oder Dispersion ein handelsübliches Netzmittel zuzusetzen oder die Bandoberfläche durch Beflammung, Koronabehandlung oder Ionisation zu aktivieren.

Anschließend durchläuft das beschichtete Band eine Trockenstrecke, in der die Schicht bei Temperaturen zwischen 30 und 200 °C getrocknet wird. Als Trockner können zum Beispiel handelsübliche Infrarot-, Umluftdüsen und UV-Trockner eingesetzt werden.

Nach dem Passieren der Trockenstrecke wird das Band durch mit Wasser oder verdünnten Säuren gefüllte Ablösebäder geführt, wo die getrocknete Schicht vom Band entfernt wird. Der Ablösevorgang wird hierbei durch zusätzliche Vorrichtungen, zum Beispiel Düsen, Bürsten oder Ultraschall, unterstützt. In einem Nachtrockner wird das Band vor der erneuten Beschichtung getrocknet.

Das endlose Band sollte aus einem chemisch und thermisch beständigen Kunststoff sein, um eine ausreichende Standzeit und hohe Trocknungstemperaturen zu gewährleisten. Hierfür sind Materialien wie Polyethylenterephthalat (PET) oder andere Polyester und Polyacrylate geeignet.

Die Folienbreite liegt typischerweise zwischen einigen Zentimetern bis zu mehreren Metern. Die Dicke beträgt zwischen 10 µm bis zu einigen mm, wobei diese beiden Parameter im Hinblick auf die jeweiligen Anforderungen optimiert werden.

Weitere Einzelheiten zu kontinuierlichen Bandverfahren sind aus US 3 138 475, EP 0 240 952 und EP 0 608 388 bekannt.

Als Precursor für die Herstellung von Titandioxidplättchen als Substrat werden wäßrige Lösungen thermisch hydrolysierbarer Titanverbindungen verwendet. Ein bevorzugter Precursor ist wäßrige Titantetrachloridlösung. Die Konzentration beträgt 7 bis 30 Gew.-%, vorzugsweise 8 bis 15 Gew.-%.

Die Titandioxidplättchen haben eine Dicke zwischen 10 nm und 500 nm, vorzugsweise zwischen 40 und 150 nm. Die Ausdehnung in die beiden anderen Dimensionen beträgt zwischen 200 µm und insbesondere zwischen 5 und 50 µm.

Die Herstellung von TiO₂-Flakes auf einem endlosen Band ist in DE 196 18 564 beschrieben.

Als Precursor für die Herstellung von Siliciumdioxidplättchen als Substrat wird eine verdünnte Wasserglaslösung verwendet, die auf eine Konzentration von 10 bis 30 Gew.-% eingestellt wird.

Die Siliziumdioxidplättchen haben eine Dicke zwischen 50 und 2000 nm und insbesondere zwischen 100 und 1000 nm. Die Ausdehnung in die beiden anderen Dimensionen beträgt zwischen 1 und 10000 µm, insbesondere zwischen 10 und 100 µm.

Bei Verwendung von Wasserglas als Precursor ist eine Säurebehandlung der vom Band abgelösten Substratpartikel erforderlich.

Die vom Band abgelösten plättchenförmigen Substratpartikel werden in einer zweiten Verfahrensstufe ohne vorherige Zwischentrocknung mit weiteren Metalloxiden nach bekannten Verfahren beschichtet. Wird als Beschichtung auf das Substrat eine Titandioxidschicht aufgebracht, wird bevorzugt das in US 3 553 001 beschriebene Verfahren verwendet.

Zu einer auf 50-100 °C, insbesondere 70-80 °C, erhitzten Suspension der plättchenförmigen Substratpartikel und eines Pigmentes, das in die Titandioxidschicht eingelagert werden soll, wird langsam eine wäßrige Titansalzlösung zugegeben, und es wird durch gleichzeitiges Zudosieren einer Base, wie z.B. wäßrige Ammoniaklösung oder eine wäßrige Alkalilauge, ein weitgehend konstanter pH-Wert von etwa 0,5-5, insbesondere etwa 1,5-2,5 eingehalten. Sobald die gewünschte Schichtdicke der TiO₂-Fällung erreicht ist, wird die Zugabe der Titansalzlösung gestoppt.

Dieses, auch als Titrationsverfahren bezeichnete Verfahren zeichnet sich dadurch aus, daß ein Überschuß an Titansalz vermieden wird. Das wird dadurch erreicht, daß man pro Zeiteinheit nur eine solche Menge der Hydrolyse zuführt, wie sie für eine gleichmäßige Beschichtung mit dem hydratisierten TiO₂ erforderlich ist und wie pro Zeiteinheit von der verfügbaren Oberfläche der zu beschichtenden Teilchen aufgenommen werden kann. Es entstehen deshalb keine hydratisierten Titandioxidteilchen, die nicht auf der zu beschichtenden Oberfläche niedergeschlagen sind. Die pro Minute zugesetzte Titansalzmenge liegt dabei in der Größenordnung von etwa 0,01 bis 20·10⁻⁵ Mol Titansalz pro Quadratmeter zu belegender Oberfläche.

Die Pigment- oder Farbstoffpartikel, die in die Titandioxidschicht eingelagert werden sollen, können auch in der Titansalzlösung fein dispergiert sein oder getrennt als wäßrige Dispersion gleichzeitig mit der Metallsalzlösung zur Substratdispersion gegeben werden. Titanoxidhydrat wird ausgefällt und die im Reaktionsmedium vorhandenen Pigment- oder Farbstoffpartikel mitgerissen und in die Hohlräume der aufgefällten wasserhaltigen Oxidschicht eingelagert. Das beschichtete Substrat wird abgetrennt, gewaschen und getrocknet, gegebenenfalls anschließend bei Temperaturen zwischen 50 und 1100 °C, vorzugsweise bei 50 bis 150 °C kalziniert. Die Einfällung von Pigment- und Farbstoffpartikeln in Metalloxidschichten ist in DE 41 40 295 beschrieben.

Anstelle von Titandioxid kann das Substrat auch mit anderen Metalloxiden beschichtet werden. Geeignete Metalloxide oder deren Gemische sind beispielsweise Zirkonoxid, Zinkoxid, Eisenoxide und/oder Chromoxid, insbesondere Fe₂O₃.

Die Beschichtung von SiO₂-Flakes mit Metalloxiden ist aus EP 0 608 388 bekannt. Weiterhin ist die Abscheidung von Metalloxiden oder Metalloxidgemischen auf plättchenförmigen Substraten auf naßchemischem Wege in den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 53 017 beschrieben.

In einer besonderen Ausführungsform des erfindungsgemäßen Pigmentes ist auf der Metalloxidschicht noch eine zusätzliche Farbmittelschicht als äußerste Schicht abgeschieden. Dieses Farbmittel kann gemäß US 4 772 331 in ein Bindemittel eingebettet sein. Die Herstellung erfolgt durch Mischen einer Suspension oder Lösung des Farbmittels und eines organischen Bindemittels in Wasser und/oder Alkohol mit einer Suspension des plättchenförmigen Pigmentes in einer Lösung eines organischen Bindemittels in Wasser und/oder Alkohol, wobei das Farbmittel auf die Oberfläche des plättchenförmigen Pigmentes aufgefällt und durch das organische Bindemittel gebunden wird.

Das Farbmittel kann aber auch auf das Pigment aufgebracht werden, ohne daß ein Bindemittel erforderlich ist. Eine Suspension des Pigmentes in einer Lösung des Farbmittels wird mit einem Lösungsmittel gemischt, in welchem das Farbmittel unlöslich ist. Dadurch wird das Farbmittel auf das Pigment abgeschieden und bildet eine fest haftende Schicht aus. Dieses Verfahren wird in US 5 156 678 beschrieben.

Weiterhin ist es möglich, das Farbmittel mit Hilfe eines Hochgeschwindigkeitsrührverfahrens (high speed stirring) auf das Pigment aufzubringen, indem Pigment und Farbmittel im trockenen Zustand intensiv miteinander vermischt werden. Dieses Verfahren ist in US 5 336 309 beschrieben.

Die äußerste Farbmittelschicht kann auch aus einem Farblack, insbesondere einem Aluminiumfarblack bestehen. Dazu wird eine Aluminiumhydroxidschicht aufgefällt, die in einem zweiten Schritt mit einem Farblack verlackt wird. Das Verfahren ist in US 4 084 983 und US 4 323 554 näher beschrieben.

Es ist möglich, das fertige Pigment einer Nachbeschichtung oder Nachbehandlung zu unterziehen, die die Licht-, Wetter- und chemische Stabilität weiter erhöht, oder die Handhabung des Pigments, insbesondere die Einarbeitung in unterschiedliche Medien, erleichtert. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage.

Die zusätzlich aufgebrachten Stoffe machen nur etwa 0,1 bis 5 Gew.-%, vorzugsweise etwa 0,5 bis 3 Gew.-%, des gesamten Pigmentes aus.

Die nachfolgenden Beispiele sollen die Erfindung näher erläutern, ohne sie zu begrenzen.

Mit den erfindungsgemäßen Pigmenten können interessante Farbeffekte erzeugt werden. Ist beispielsweise die Farbmittelschicht auf der Metalloxidbeschichtung blau, die Interferenzfarbe gold und die Farbe des Substrates rot, dann erhält man bei geringer Abweichung vom Glanzwinkel grün und bei noch stärkerer Abweichung ein bläuliches Silber, während die Körperfarbe blauviolett ist. Ist beispielsweise die Farbmittelschicht auf der Metalloxidbeschichtung rot, die Interferenzfarbe gold und die Farbe des Substrates blau, dann erhält man bei geringer Abweichung vom Glanzwinkel orange und bei noch stärkerer Abweichung ein rötliches Silber, während die Körperfarbe rotviolett ist.

Bei dieser Kombination von zwei Absorptionspigmenten mit die Interferenzfarben erzeugenden Metalloxidschichten ist es möglich, temperaturempfindliche Farbmittel als äußerste Schicht einzusetzen, da in solchen Fällen das Pigment nur noch getrocknet werden muß.

### Beispiel 1

In einer Perl-Mühle werden 500 ml einer 3%igen Dispersion von DPP-BO-Rot-Partikeln (Ciba) hergestellt. Zur besseren Dispergierbarkeit werden 0,5 % eines Dispergieradditives (Hydropallat 884 von Henkel) zugesetzt. Diese Suspension wird anschließend 1:1 mit Wasserglas gemischt. Diese Dispersion wird wie in PCT/EP 92/02351 beschrieben, mit Hilfe eines endlosen Bandes in SiO₂-Flakes überführt, in denen DPP-Rot-Partikel enthalten sind.

100 g der so erhaltenen Flakes werden in 2 l Wasser suspendiert und auf 75 °C erhitzt. Zu der Suspension wird eine Lösung bestehend aus 10 g SnCl₄·5H₂O und 30 ml 37%iger HCl in 200 ml Wasser hinzudosiert. Der pH-Wert wird während der Zugabe mit 32%iger NaOH-Lösung konstant gehalten. Nach beendeter Zugabe der SnCl₄-Lösung werden 450 ml TiCl₄-Lösung (400 g TiCl₄/l Wasser) zudosiert. Der pH-Wert wird während der Belegung durch Zugabe von 32%iger NaOH-Lösung konstant gehalten. Nach beendeter Zugabe wird 15 min bei 75 °C nachgerührt. Das Pigment wird abfiltriert, salzfrei gewaschen und bei 150 °C getrocknet.

50 g des so erhaltenen Produktes werden in 1 l Wasser suspendiert und auf 75 °C erhitzt. Zu der Suspension wird bei pH 8 eine Lösung von 6 g AlCl₃·6H₂O in 100 ml Wasser zudosiert, wobei der pH durch gleichzeitige Zugabe von 10%iger NaOH konstant gehalten wird. Nach einer 30minütigen Rührphase wird ein pH von 4,3 eingestellt und 2 ml Ethomeen S12 zugegeben. Nun wird eine Lösung auf 0,3 g AlCl₃·6H₂O in 100 ml Wasser sowie eine Lösung aus 1 g Duasyn-Säureblau AE02 in 100 ml Wasser hinzudosiert. Der pH-Wert verändert sich während der Belegung kaum und wird durch wenige Tropfen 5%iger HCl reguliert. Anschließend erfolgt erst die Zugabe von 50 ml einer verdünnten Natronwasserglaslösung (7,5 ml Natronwasserglas mit 42,5 ml Wasser verdünnt) und danach von 2,5 g AlK(SO₄)₂ gelöst in 50 ml Wasser ohne den pH-Wert zu regulieren. Das Produkt wird abgesaugt, salzfrei gewaschen und bei 80 °C getrocknet.

Man erhält ein goldfarbenes Interferenzpigment, das bei Änderung des Betrachtungswinkels zuerst eine grüne und dann eine blauviolette Farbe zeigt.

### Beispiel 2

In einer Perl-Mühle werden 500 ml einer 3%igen Dispersion von Kobaltoxid-Partikeln hergestellt. Zur besseren Dispergierbarkeit werden 0,5 % eines Dispergieradditives (Hydropallat 884 von Henkel) zugesetzt. Diese Suspension wird anschließend 1:1 mit Wasserglas gemischt. Diese Dispersion wird wie in PCT/EP 92/02351 beschrieben, mit Hilfe eines endlosen Bandes in SiO₂-Flakes überführt, in denen blaue Kobaltoxid-Partikel enthalten sind.

100 g der so erhaltenen Flakes werden in 2 l Wasser suspendiert und auf 75 °C erhitzt. Zu der Suspension wird eine Lösung bestehend aus 10 g SnCl₄·5H₂O und 30 ml 37%iger HCl in 200 ml Wasser hinzudosiert. Der pH-Wert wird während der Zugabe mit 32%iger NaOH-Lösung konstant gehalten. Nach beendeter Zugabe der SnCl₄-Lösung werden 450 ml TiCl₄-Lösung (400 g TiCl₄/l Wasser) zudosiert. Der pH-Wert wird während der Belegung durch Zugabe von 32%iger NaOH-Lösung konstant gehalten. Nach beendeter Zugabe wird 15 min bei 75 °C nachgerührt. Das Pigment wird abfiltriert, salzfrei gewaschen und bei 150 °C getrocknet.

50 g des so erhaltenen Produktes werden in 1 l Wasser suspendiert und auf 75 °C erhitzt. Zu der Suspension wird bei pH 8 eine Lösung von 6 g AlCl₃·6H₂O in 100 ml Wasser zudosiert, wobei der pH durch gleichzeitige Zugabe von 10%iger NaOH konstant gehalten wird. Nach einer 30minütige Rührphase wird ein pH von 4,3 eingestellt und 2 ml Ethomeen S12 zugegeben. Nun wird eine Lösung auf 0,3 g AlCl₃·6H₂O in 100 ml Wasser sowie eine Lösung aus 1 g Allura Red (FDC Red 40) in 100 ml Wasser hinzudosiert. Der pH-Wert verändert sich während der Belegung kaum und wird durch wenige Tropfen 5%iger HCl reguliert. Anschließend erfolgt erst die Zugabe von 50 ml einer verdünnten Natronwasserglaslösung (7,5 ml Natronwasserglas mit 42,5 ml Wasser verdünnt) und danach von 2,5 g AlK(SO₄)₂ gelöst in 50 ml Wasser ohne den pH-Wert zu regulieren. Das Produkt wird abgesaugt, salzfrei gewaschen und bei 80 °C getrocknet.

Man erhält ein goldfarbenes Interferenzpigment, das bei Änderung des Betrachtungswinkels zuerst eine orange und dann eine rotviolette Farbe zeigt.

### Beispiel 3

In einer Perl-Mühle werden 500 ml einer 3%igen Dispersion von DPP-BO-Rot-Partikeln (Ciba) hergestellt. Zur besseren Dispergierbarkeit werden 0,5 % eines Dispergieradditives (Hydropallat 884 von Henkel) zugesetzt. Diese Suspension wird anschließend 1:1 mit Wasserglas gemischt. Diese Dispersion wird wie in PCT/EP 92/02351 beschrieben, mit Hilfe eines endlosen Bandes in SiO₂-Flakes überführt, in denen DPP-Rot-Partikel enthalten sind.

100 g der so erhaltenen Flakes werden in 2 l Wasser suspendiert und auf 75 °C erhitzt. Zu der Suspension wird eine Lösung bestehend aus 10 g SnCl₄·5H₂O und 30 ml 37%iger HCl in 200 ml Wasser hinzudosiert. Der pH-Wert wird während der Zugabe mit 32%iger NaOH-Lösung konstant gehalten. Nach beendeter Zugabe der SnCl₄-Lösung werden 450 ml TiCl₄-Lösung (400 g TiCl₄/l Wasser) zudosiert. Gleichzeitig aber separat wird eine Suspension aus 10 g Berliner Blau in 440 ml Wasser zugegeben. Der pH-Wert wird während der Belegung durch Zugabe von 32%iger NaOH-Lösung konstant gehalten. Nach beendeter Zugabe wird 15 min bei 75 °C nachgerührt. Das Pigment wird abfiltriert, salzfrei gewaschen und bei 150 °C getrocknet.

Man erhält ein goldfarbenes Interferenzpigment, das bei Änderung des Betrachtungswinkels zuerst eine grüne und dann eine blauviolette Farbe zeigt.

### Beispiel 4

In einer Perl-Mühle werden 500 ml einer 3%igen Dispersion von Kobaltoxid-Partikeln hergestellt. Zur besseren Dispergierbarkeit werden 0,5 % eines Dispergieradditives (Hydropallat 884 von Henkel) zugesetzt.

Diese Suspension wird anschließend 1:1 mit Wasserglas gemischt. Diese Dispersion wird wie in PCT/EP 92/02351 beschrieben, mit Hilfe eines endlosen Bandes in SiO₂-Flakes überführt, in denen blaue Kobaltoxid-Partikel enthalten sind.

100 g der so erhaltenen Flakes werden in 2 l Wasser suspendiert und auf 75 °C erhitzt. Zu der Suspension wird eine Lösung bestehend aus 10 g SnCl₄·5H₂O und 30 ml 37%iger HCl in 200 ml Wasser hinzudosiert. Der pH-Wert wird während der Zugabe mit 32%iger NaOH-Lösung konstant gehalten. Nach beendeter Zugabe der SnCl₄-Lösung werden 450 ml TiCl₄-Lösung (400 g TiCl₄/l Wasser) zudosiert. Gleichzeitig aber separat wird eine Suspension aus 10 g DPP-Rot-BL in 430 ml Wasser zugegeben. Der pH-Wert wird während der Belegung durch Zugabe von 32%iger NaOH-Lösung konstant gehalten. Nach beendeter Zugabe wird 15 min bei 75 °C nachgerührt. Das Pigment wird abfiltriert, salzfrei gewaschen und bei 150 °C getrocknet.

Man erhält ein goldfarbenes Interferenzpigment, das bei Änderung des Betrachtungswinkels zuerst eine orange und dann eine rotviolette Farbe zeigt.

### Beispiel 5

100 g Glimmer (Teilchengröße 10-40 µm) werden in 2 l Wasser suspendiert und auf 75 °C erhitzt. Zu der Suspension wird eine Lösung bestehend aus 10 g SnCl₄·5H₂O und 30 ml 37%iger HCl in 200 ml Wasser hinzudosiert. Der pH-Wert wird während der Zugabe mit 32%iger NaOH-Lösung konstant gehalten. Nach beendeter Zugabe der SnCl₄-Lösung werden 450 ml TiCl₄-Lösung (400 g TiCl₄/l Wasser) zudosiert. Gleichzeitig aber separat wird eine Suspension aus 10 g Berliner Blau in 440 ml Wasser zugegeben. Der pH-Wert wird während der Belegung durch Zugabe von 32%iger NaOH-Lösung konstant gehalten. Nach beendeter Zugabe wird 15 min bei 75 °C nachgerührt. Das Pigment wird abfiltriert, salzfrei gewaschen und bei 150 °C getrocknet.

50 g des so erhaltenen Produktes werden in 1 l Wasser suspendiert und auf 75 °C erhitzt. Zu der Suspension wird bei pH 8 eine Lösung von 6 g AlCl₃·6H₂O in 100 ml Wasser zudosiert, wobei der pH durch gleichzeitige Zugabe von 10%iger NaOH konstant gehalten wird. Nach einer 30minütigen Rührphase wird ein pH von 4,3 eingestellt und 2 ml Ethomeen S12 zugegeben. Nun wird eine Lösung auf 0,3 g AlCl₃·6H₂O in 100 ml Wasser sowie eine Lösung aus 1 g Allura Red (FDC Red 40) in 100 ml Wasser hinzudosiert. Der pH-Wert verändert sich während der Belegung kaum und wird durch wenige Tropfen 5%iger HCl reguliert. Anschließend erfolgt erst die Zugabe von 50 ml einer verdünnten Natronwasserglaslösung (7,5 ml Natronwasserglas mit 42,5 ml Wasser verdünnt) und danach von 2,5 g AlK(SO₄)₂ gelöst in 50 ml Wasser ohne den pH-Wert zu regulieren. Das Produkt wird abgesaugt, salzfrei gewaschen und bei 80 °C getrocknet.

Man erhält ein goldfarbenes Interferenzpigment, das bei Änderung des Betrachtungswinkels zuerst eine orange und dann rotviolette Farbe zeigt.

## Patentansprüche

1. Farbiges Interferenzpigment, umfassend eine plättchenförmige Schicht als Substrat und eine Beschichtung aus mindestens einer Metalloxidschicht und gegebenenfalls einer weiteren Schicht, wobei mindestens zwei Schichter zusätzlich Farbmittel in Partikelforrn enthalten oder wobei mindestens eine Schicht zusätzlich ein Farbmittel in Partikelform enthält und eine weitere Schicht aus einem Farblack besteht.

2. Interferenzpigment nach Anspruch 1, **dadurch gekennzeichnet, daß** es ein plättchenförmiges Substrat und eine Beschichtung aus mindestens einer Metalloxidschicht umfasst, wobei das Pigment im Substrat und in der Beschichtung zusätzlich mindestens ein Farbmittel in Partikelform enthält.

3. Interferenzpigment nach Anspruch 1, **dadurch gekennzeichnet, daß** es ein plättchenförmiges Substrat sowie eine Beschichtung aus mindestens einer Metalloxidschicht und eine Farbmittelschicht auf der Beschichtung umfasst, wobei das Pigment im Substrat und in der Beschichtung zusätzlich mindestens ein Farbmittel in Partikelform enthält oder wobei das Pigment im Substrat oder in der Beschichtung zusätzlich mindestens ein Farbmittel in Partikelform enthält und die Farbmittelschicht ein Farbmittel in Partikelform enthält oder aus einem Farblack besteht.

4. Interferenzpigment nach Anspruch 1, **dadurch gekennzeichnet, daß** es ein plättchenförmiges Substrat sowie eine Beschichtung aus mindestens einer Metalloxidschicht und eine Farbmittelschicht auf der Beschichtung umfasst, wobei das Pigment im Substrat mindestens ein Farbmittel in Partikelform enthält und wobei die Farbmittelschicht ein Farbmittel in Partikelform enthält oder aus einem Fairblack besteht.

5. Interferenzpigment nach Anspruch 1, **dadurch gekennzeichnet, daß** es ein plättchenförmiges Substrat sowie eine Beschichtung aus mindestens einer Metalloxidschicht und eine Farbmittelschicht auf der Beschichtung umfasst, wobei das Pigment in der Beschichtung zusätzlich mindestens ein Farbmittel in Partikelform enthält und wobei die Farbmittelschicht ein Farbmittel in Partikelform enthält oder aus einem Farblack besteht.

6. Interferenzpigment nach mindestens einem der Ansprüche 1 bis 5, **dadurch gekennzeichnet, daß** das plättchenförmige Substrat aus einem Precursor auf einem endlosen Band hergestellt wird.

7. Interferenzpigment nach Anspruch 6, **dadurch gekennzeichnet, daß** der Precursor eine thermisch hydrolisierbare, wasserlösliche Metallverbindung umfasst oder wässrige Lösungen von anorganischen oder organischen Verbindungen der Metalle Aluminium, Silicium, Kalium oder Natrium mit Boraten, Aluminaten, Poly- bzw. Metaphosphaten, Silikaten oder Gemische derselben enthält.

8. Interferenzpigment nach mindestens einem der Ansprüche 1 bis 7, **dadurch gekennzeichnet, daß** die Metalloxidschicht Titandioxid, Zirkonoxid, Zinkoxid, Eisenoxide, Chromoxid, Antimon dotiertes Zinnoxid und deren Gemische umfasst.

9. Interferenzpigment nach mindestens einem der Ansprüche 1 bis 8, **dadurch gekennzeichnet, daß** das Farbmittel ein anorganisches Pigment oder ein organisches Pigment in Partikelform ist.

10. Verfahren zur Herstellung des erfindungsgemäßen Pigmentes nach Anspruch 2, **dadurch gekennzeichnet, daß**
- in einem Precursor des Substratmaterials ein Farbmittel dispergiert wird,
- die Dispersion als dünner Film auf ein endloses Band aufgebracht wird,
- der flüssige Film durch Trocknung verfestigt wird,
- die entstandene Schicht von der glatten Oberfläche getrennt und gegebenenfalls mit einer Säure behandelt wird,
- die erhaltenen Substratpartikel gewaschen und anschließend mit einer oder mehreren Schichten aus Metalloxiden belegt werden, wobei die Fällung der Metalloxide aus einer Dispersion eines Farbmittels erfolgt.

11. Verfahren zur Herstellung des erfindungsgemäßen Pigmentes nach Anspruch 3, **dadurch gekennzeichnet, daß**
- in einem Precursor des Substratmaterials ein Farbmittel dispergiert oder gelöst wird,
- die Dispersion als dünner Film auf ein endloses Band aufgebracht wird,
- der flüssige Film durch Trocknung verfestigt wird,
- die entstandene Schicht von der glatten Oberfläche getrennt und gegebenenfalls mit einer Säure behandelt wird,
- die erhaltenen Substratpartikel gewaschen und anschließend mit einer oder mehreren Schichten aus Metalloxiden belegt werden, wobei die Fällung der Metalloxide aus einer Dispersion oder Lösung eines Farbmittels erfolgt und
- eine Farbmittelschicht auf die Beschichtung aufgebracht wird, wobei mindestens zwei Schichten zusätzlich Farbmittel in Partikelform enthalten.

12. Verfahren zur Herstellung des erfindungsgemäßen Pigmentes nach Anspruch 4, **dadurch gekennzeichnet, daß**
- in einem Precursor des Substratmaterials ein Farbmittel dispergiert wird,
- die Dispersion als dünner Film auf ein endloses Band aufgebracht wird,
- der flüssige Film durch Trocknung verfestigt wird,
- die entstandene Schicht von der glatten Oberfläche getrennt und gegebenenfalls mit einer Säure behandelt wird,
- die erhaltenen Substratpartikel gewaschen und anschließend mit einer oder mehreren Schichten aus Metalloxiden belegt werden und
- eine Farbmittelschicht auf die Beschichtung aufgebracht wird, wobei die Farbmittelschicht ein Farbmittel in Partikelform enthält oder aus einem Farblack besteht.

13. Verfahren zur Herstellung des erfindungsgemäßen Pigmentes nach Anspruch 5, **dadurch gekennzeichnet, daß**
- plättchenförmige Substratpartikel dispergiert und anschließend mit einer oder mehreren Schichten aus Metalloxiden belegt werden, wobei die Fällung der Metalloxide aus einer Dispersion eines Farbmittels erfolgt und
- eine Farbmittelschicht auf die Beschichtung aufgebracht wird wobei die Farbmittelschicht ein Farbmittel in Partikelform enthält oder aus einem Farblack besteht.

14. Verwendung des Pigmentes nach den Ansprüchen 1 bis 9 zur Pigmentierung von Lacken, Druckfarben, Kunststoffen, Kosmetika und Glasuren für Keramiken und Gläser.

15. Lacke, Druckfarben, Kunststoffe, Kosmetika, Keramiken und Gläser, welche mit einem Pigment nach den Ansprüchen 1 bis 9 pigmentiert sind.

## Claims

1. Coloured interference pigment comprising a platelet-shaped layer as substrate and a coating of at least one metal oxide layer with or without a further layer, at least two layers additionally comprising colorants in particle form or at least one layer additionally comprising a colorant in particle form and a further layer consisting of a colour lake.

2. Interference pigment according to Claim 1, **characterized in that** it comprises a platelet-shaped substrate and a coating of at least one metal oxide layer, the pigment in the substrate and in the coating additionally comprising at least one colorant in particle form.

3. Interference pigment according to Claim 1, **characterized in that** it comprises a platelet-shaped substrate and a coating of at least one metal oxide layer, and a colorant layer on the coating, the pigment in the substrate and in the coating additionally comprising at least one colorant in particle form or the pigment in the substrate or in the coating additionally comprising at least one colorant in particle form and the colorant layer comprising a colorant in particle form or consisting of a colour lake.

4. Interference pigment according to Claim 1, **characterized in that** it comprises a platelet-shaped substrate and a coating of at least one metal oxide layer, and a colorant layer on the coating, the pigment in the substrate comprising at least one colorant in particle form and the colorant layer comprising a colorant in particle form or consisting of a colour lake.

5. Interference pigment according to Claim 1, **characterized in that** it comprises a platelet-shaped substrate and a coating of at least one metal oxide layer, and a colorant layer on the coating, the pigment in the coating additionally comprising at least one colorant in particle form and the colorant layer comprising a colorant in particle form or consisting of a colour lake.

6. Interference pigment according to at least one of Claims 1 to 5, **characterized in that** the platelet-shaped substrate is produced from a precursor on a continuous belt.

7. Interference pigment according to Claim 6, **characterized in that** the precursor comprises a thermally hydrolysable, water-soluble metal compound or comprises aqueous solutions of organic or inorganic compounds of the metals aluminium, silicon, potassium or sodium with borates, aluminates, polyphosphates, metaphosphates, silicates or mixtures thereof.

8. Interference pigment according to at least one of Claims 1 to 7, **characterized in that**: the metal oxide layer comprises titanium dioxide, zirconium oxide, zinc oxide, iron oxides, chromium oxide, antimony-doped tin oxide and mixtures thereof.

9. Interference pigment according to at least one of Claims 1 to 8, **characterized in that** the colorant is an inorganic pigment or an organic pigment in particle form.

10. Process for preparing the pigment according to Claim 2, **characterized in that**
- a colorant is dispersed in a precursor of the substrate material,
- the dispersion is applied as a thin film to a continuous belt,
- the liquid film is solidified by drying,
- the resultant layer is separated from the smooth surface and, if desired, is treated with an acid,
- the resultant substrate particles are washed and then coated with one or more layers of metal oxides, the precipitation of the metal oxides taking place from a dispersion of a colorant.

11. Process for preparing the pigment according to Claim 3, **characterized in that**
- a colorant is dispersed or dissolved in a precursor of the substrate material,
- the dispersion is applied as a thin film to a continuous belt,
- the liquid film is solidified by drying,
- the resultant layer is separated from the smooth surface and, if desired, is treated with an acid,
- the resultant substrate particles are washed and then coated with one or more layers of metal oxides, the precipitation of the metal oxides taking place from a dispersion or solution of a colorant and
- a colorant layer is applied to the coating, at least two layers additionally comprising colorants in particle form.

12. Process for preparing the pigment according to Claim 4, **characterized in that**
- a colorant is dispersed in a precursor of the substrate material,
- the dispersion is applied as a thin film to a continuous belt,
- the liquid film is solidified by drying,
- the resultant layer is separated from the smooth surface and, if desired, is treated with an acid,
- the resultant substrate particles are washed and then coated with one or more layers of metal oxides and
- a colorant layer is applied to the coating, the colorant layer comprising a colorant in particle form or consisting of a colour lake.

13. Process for preparing the pigment according to Claim 5, **characterized in that**
- platelet-shaped substrate particles are dispersed and then coated with one or more layers of metal oxides, the precipitation of the metal oxides taking place from a dispersion of a colorant and
- a colorant layer is applied to the coating, the colorant layer comprising a colorant in particle form or consisting of a colour lake.

14. Use of the pigment according to Claims 1 to 9 for pigmenting paints, printing inks, plastics, cosmetics and glazes for ceramics and glasses.

15. Paints, printing inks, plastics, cosmetics, ceramics and glasses pigmented with a pigment according to Claims 1 to 9.

## Revendications

1. Pigment d'interférence coloré comprenant une couche en paillettes comme substrat et un revêtement constitué d'au moins une couche d'oxyde métallique et éventuellement d'une autre couche, dans lequel au moins deux couches comprennent en plus des colorants sous forme particulaire ou dans lequel au moins une couche comprend en plus un colorant sous forme particulaire et une autre couche est composée d'une laque colorée.

2. Pigment d'interférence selon la revendication 1, **caractérisé en ce qu'**il comprend un substrat en paillettes et un revêtement constitué d'au moins une couche d'oxyde métallique, dans lequel le pigment dans le substrat et dans le revêtement comprend en plus au moins un colorant sous forme particulaire.

3. Pigment d'interférence selon la revendication 1, **caractérisé en ce qu'**il comprend un substrat en paillettes, ainsi qu'un revêtement constitué d'au moins une couche d'oxyde métallique et une couche de colorant sur le revêtement, le pigment dans le substrat et dans le revêtement comprenant en plus au moins un colorant sous forme particulaire ou dans lequel le pigment dans le substrat ou dans le revêtement comprend en plus au moins un colorant sous forme particulaire et la couche de colorant comprend un colorant sous forme particulaire ou est composée d'une laque colorée.

4. Pigment d'interférence selon la revendication 1, **caractérisé en ce qu'**il comprend un substrat en paillettes, ainsi qu'un revêtement constitué d'au moins une couche d'oxyde métallique et une couche de colorant sur le revêtement, dans lequel le pigment dans le substrat comprend au moins un colorant sous forme particulaire et la couche de colorant comprend un colorant sous forme particulaire ou est composée d'une laque colorée.

5. Pigment d'interférence selon la revendication 1, **caractérisé en ce qu'**il comprend un substrat en paillettes, ainsi qu'un revêtement constitué d'au moins une couche d'oxyde métallique et une couche de colorant sur le revêtement, le pigment dans le revêtement comprend en plus au moins un colorant sous forme particulaire et la couche de colorant comprend un colorant sous forme particulaire ou est composée d'une laque colorée.

6. Pigment d'interférence selon au moins l'une des revendications 1 à 5, **caractérisé en ce que** le substrat en paillettes est préparé à partir d'un précurseur sur une bande continue.

7. Pigment d'interférence selon la revendication 6, **caractérisé en ce que** le précurseur comprend un composé métallique soluble dans l'eau, thermiquement hydrolysable ou contient des solutions aqueuses de composés inorganiques ou organiques des métaux aluminium, silicium, potassium ou sodium avec des borates, aluminates, polyphosphates respectivement métaphosphates, silicates ou leurs mélanges.

8. Pigment d'interférence selon au moins l'une des revendications 1 à 7, **caractérisé en ce que** la couche d'oxyde métallique comprend le dioxyde de titane, l'oxyde de zirconium, l'oxyde de zinc, les oxydes de fer, l'oxyde de chrome, l'oxyde d'étain dopé à l'antimoine et leurs mélanges.

9. Pigment d'interférence selon au moins l'une des revendications 1 à 8, **caractérisé en ce que** le colorant est un pigment inorganique ou un pigment organique sous forme particulaire.

10. Procédé pour la préparation du pigment conforme à l'invention selon la revendication 2, **caractérisé en ce que** :
- on disperse un colorant dans un précurseur du matériau du substrat,
- on applique la dispersion sous forme de film mince sur une bande continue,
- on solidifie par séchage le film liquide,
- on sépare de la surface supérieure lisse la couche obtenue et on traite éventuellement avec un acide,
- on lave les particules de substrat obtenues, puis on recouvre celles-ci d'une ou plusieurs couches d'oxydes métalliques, dans lequel le dépôt des oxydes métalliques est réalisé à partir d'une dispersion d'un colorant.

11. Procédé pour la préparation du pigment conforme à l'invention selon la revendication 3, **caractérisé en ce que** :
- on disperse ou dissout un colorant dans un précurseur du matériau substrat,
- on applique la dispersion sous forme de film mince sur une bande continue,
- on solidifie par séchage le film liquide,
- on sépare de la surface supérieure lisse la couche obtenue et éventuellement on traite avec un acide,
- on lave les particules de substrat obtenues, puis on recouvre celles-ci d'une ou plusieurs couches d'oxydes métalliques, dans lequel le dépôt des oxydes métalliques est réalisé à partir d'une dispersion ou d'une solution d'un colorant,
- on applique une couche de colorant sur le revêtement, dans lequel deux couches au moins comprennent en plus des colorants sous forme particulaire.

12. Procédé pour la préparation du pigment conforme à l'invention selon la revendication 4, **caractérisé en ce que** :
- on disperse un colorant dans un précurseur du matériau du substrat,
- on applique la dispersion sous forme de film mince sur une bande continue,
- on solidifie par séchage le film liquide,
- on sépare de la surface supérieure lisse la couche obtenue et on traite éventuellement avec un acide,
- on lave les particules de substrat obtenues, puis on recouvre celles-ci d'une ou plusieurs couches d'oxydes métalliques,
- on applique une couche de colorant sur le revêtement, dans lequel la couche de colorant comprend un colorant sous forme particulaire ou est composée d'une laque colorée.

13. Procédé pour la préparation du pigment conforme à l'invention selon la revendication 5, **caractérisé en ce que** :
- on disperse les particules de substrat en paillettes, puis on recouvre celles-ci d'une ou plusieurs couches d'oxydes métalliques, dans lequel le dépôt des oxydes métalliques est réalisé à partir d'une dispersion d'un colorant et
- on applique une couche de colorant sur le revêtement, dans lequel la couche de colorant comprend un colorant sous forme particulaire ou est composée d'une laque colorée.

14. Utilisation du pigment selon les revendications 1 à 9 pour la pigmentation des laques, encres d'imprimerie, matières plastiques, cosmétiques et glaçures pour céramiques et verres.

15. Laques, encres d'imprimerie, matières plastiques, cosmétiques, céramiques et verres, pigmentés avec un pigment selon les revendications 1 à 9.
